# DEMANDE DE BREVET EUROPEEN

(11) **EP 0 605 352 A1**
(43) Date de publication de la demande: **06.07.1994**
(21) Numéro de dépôt: 93500086.9
(22) Date de dépôt: 17.05.1993
(51) Int. Cl.: B62B 3/10, A47L 13/50

(54) **Dispositif de support glissant pour des seaux à nettoyer**

(71) Demandeur: Segura Alaman, Vicenta, E-46680 Algemesi (Valencia) (ES)
(72) Inventeur: Segura Alaman, Vicenta, E-46680 Algemesi (Valencia) (ES)
(74) Mandataire: Maldona do Jordan, Julia

(57) **Abrégé**

Dispositif de support glissant pour des seaux à nettoyer. Il comprend une structure formée par deux bandes métaliques (2) et (3) croisées à 90^{º} et solidaires par la zone de croisement. Les bouts des deux bandes sont doublés en angle avec une notable convergence. Au côté extérieur des bandes et vers leurs bouts ils existent des roulements (9) auto-orientables.

Le dispositif est applicable comme support glissant pour des seaux à nettoyer.

## Description

### DOMAIN DE L'INVENTION

Le présent Brevet d'Invention concerne un dispositif de support glissant pour des seaux de nettoyage, qui ajoute à la fonction dont il est destiné, plusieurs avantages qu'on décrira ci-après, à part d'autres rélatifs à son organisation et sa constitution.

### ANTECEDENTS DE L'INVENTION

Actuellement, les seaux, cuvettes ou récipients utilisés pour le nettoyage des planchers, mênent des dispositifs pour égoutter les outils de lavage, bardanes et similaires, ainsi que un ou plusieurs cubicules pour l'eau de l'éclairage et autres moyens plus ou moins ingénieux, conçus pour améliorer le travail en question; cependant, l'état actuel de la technique ne regarde pas l'existence de moyens adaptables au seau ou récipient, conçus pour favoriser son glissement sur la surface de travail, sans diminuer sa stabilité. Actuellement, ce que la personne qui opère l'appareil fait, c'est pousser le seau, qu'il traîne sur la surface afin de le placer près à la région où il doit réaliser son travail. Ces conditions de travail sont plutôt pénibles, puisque elles tendent à fatiguer à l'opérateur, elle causent la chute du seau et par conséquence le versement de l'eau de nettoyage, elles endommagent le plancher dû à la friction du seau sur le pavé, et elles genèrent des bruits et d'autres gênes.

### SOMMAIRE DE L'INVENTION

La demandante du présent Brevet a conçu un dispositif de support glissant sur la surface de travail, composé par une structure appropriément configurée afin de permettre l'emboîtage à pression d'un seau standard, comme ceux utilisés d'habitude pour le lavage de planchers.

La structure apporte des roues qui tournent librement, ce qui favorit un glissement parfait de l'ensemble, soit le support plus le seau, dans n'importe quelle direction sur la surface du plancher, sans aucun effort pour l'opérateur sans des bruits et sans endommagement du pavé.

Ce dispositif est approprié pour son utilisation au foyer et il est extrèmement pratique pour le nettoyage de grandes surfaces.

A l'objet de réduire les coûts de fabrication et de fournir au support avec une configuration fonctionellement excellente, on a prevu de simplifier la structure du tel support, en employant un minimum de components, et à cause de ceci on a pu éliminer des compliquées opérations de mécanisation, des outils, des phases de montage, etc., du procès de fabrication.

En même temps, le dispositif de support inclus des moyens qui améliorent la relation et l'union entre le seau et le support, mais qui n'empêchent pas le dégagement de l'un et l'autre élément, lorsque ceci convient.

Le dispositif, selon le présent Brevet d'Invention, offre des avantages qu'on a décrit antérieurement, en plus d'autres qu'on déduira facilement à la vue de l'exemple de réalisation qu'on décrit en détail ci-après, afin de rendre plus facile l'entendement des caractéristiques exposées précedemment, en faisant connaître d'ailleurs divers détails, A ce but on joint à la présente mémoire des dessins où, seulement comme exemple qui évidemment ne limite pas les possibilités de la présente invention, l'on présente un cas pratique de l'objectif de celle-ci.

### BREVE DESCRIPTION DES DESSINS

Dans les dessins:

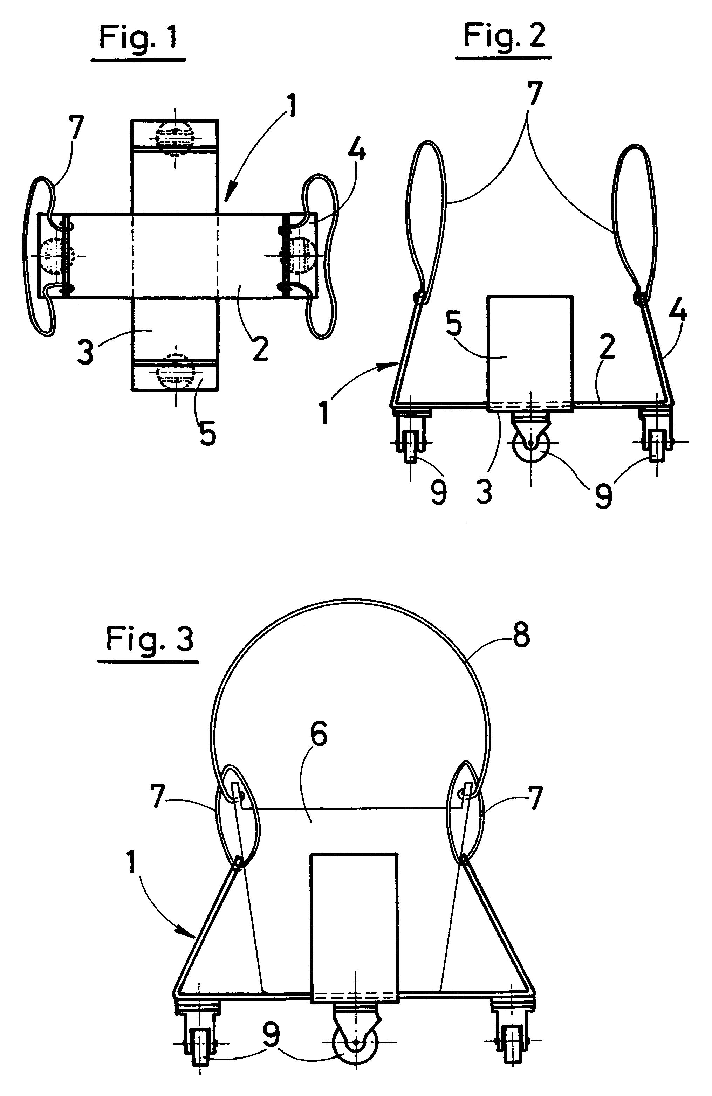

La figure 1, c'est une vue en coupe horizontale du dispositif.

La figure 2, c'est une vue en élévation du dispositif, par rapport à la figure précedente.

La figure 3, présente une vue en élévation du dispositif, accouplé à un seau de nettoyage, en une position opérative de travail.

### DESCRIPTION DU FONCTIONNEMENT DE L'INVENTION

Par rapport à ce qui est représenté dans les dessins, le dispositif objet de cette invention comprend une structure ou cadre, généralement référencé comme -1-, formé par deux bandes métaliques -2-. et -3-, entrecroisées à 90^{º} et soudées entre elles, quoique elles pourraient vraiement se rapporter en n'importe quelle façon.

Les susdites bandes -2- et -3- présentent à leurs bouts des prolongements verticales -4- et -5-, munis d'un notable penchant envers leur axe de symétrie, d'une telle façon qu'entre elles on fait emboîter à pression le seau -6-, porteur de l'eau savonnée et du reste d'élements habituels pour le nettoyage de surfaces, afin que ces prolongements verticales réalisent une legère pression sur la surface latérale du seau, ce qui empêche le renversement ou écartement du seau pendant la réalisation de la tâche, en donnant comme résultat un ensemble unique, le support et le seau, ce qui favorit son transport sur le sol.

Aux effets d'un meilleur rapport et d'une meilleure union entre le seau -6- et le support -1-, on a prévu des tenseurs élastiques -7-, qui se rapportent avec les prolongements verticales -4- et -5-, et qu'on fait passer à travers de l'anse -8- du seau, en restant comme ça entièrement étirés les tenseurs lorsqu'on place l'anse en position verticale, et ainsi le support et le seau deviennent entièrement fixés.

Au-dessous du support -1-, on a prévu des roues -9-, à tour libre, qui se rapportent avec le support par des moyens standard, aux effets d'un parfait glissement dans n'importe quelle direction sur la surface du sol.

L'invention, bien qu'essentielle, peut être mênée à la pratique sous autres manières de réalisation en changeant quelques détails par rapport à l'exemple déscriptif ci-dessus. La protection qu'on demande devra également couvrir ces cas là. Il pourra donc être construit en n'importe qu'elle forme ni quelle grandeur, avec les matériaux et les moyens les plus appropriés, et rester toujours au dedans de l'esprit des revendications.

## Revendications

**1.-** Dispositif de support glissant pour des seaux à nettoyer, dont la caracteristique plus notable c'est la d'être formé par une structure ou cadre qui configure une base horizontale pour l'appui du fond du seau, cette base étant munie au côté inférieur de roulements auto-orientables et étant fournie à sa périphérie de matériel étendu en vertical, avec un notable penchant envers l'axe de symetrie de l'ensemble, dont le bord libre marque une ouverture supérieure expandible, legèrement infèrieure à la section moyenne du seau, aux effets de faire pression sur la face exterieure du susdit seau, suffissante pour rapporter les deux éléments entre eux.

**2.-** Dispositif de support glissant pour des seaux à nettoyer, selon revendication 1, notablement caracterisé par la structure du support, qui comprend des moyens élastiques qui la rapportent avec le seau à soutenir.

**3.-** Dispositif de support glissant pour des seaux à nettoyer, selon revendication 1, notablement caracterisé par la structure du support, qui est formée par deux bandes métaliques, entrecroisées à 90^{º} et solidaires entre elles par soudure ou d'autre moyen similaire, dont leurs bouts sont munis de prolongements verticales, mais legèrement penchés vers leur axe de symetrie,

**4.-** Dispositif de support glissant pour des seaux à nettoyer, selon revendication 2, notablement caracterisé par les moyens élastiques, qui sont formés par des tenseurs filiformes, rapportés aux prolongements verticales de la structure, et étant conçus pour être passés à travers de l'anse du seau, en se tendent ceux-ci lorsque la susdite anse prend une position verticale. Tout cela selon on décrit, revendique et graphie à la présente mémoire, qui est formée par 7 pages folio, numérotées et dactylographiées sur seulement une de leur faces, ainsi que par une feuille de dessins qui l'illustrent et par un résumé.
